# EUROPEAN PATENT SPECIFICATION

(11) **EP 2 232 982 B1**
(45) Date of publication and mention of the grant of the patent: **09.03.2016**
(21) Application number: 10156296.5
(22) Date of filing: 12.03.2010
(51) Int. Cl.: A01F 25/20

(54) **Apparatus and method for cutting silage**
Vorrichtung und Verfahren zum Schneiden von Silage
Appareil et procédé de découpe de fourrage

(30) Priority: 19.03.2009 NL 2002644
(43) Date of publication of application: 29.09.2010
(73) Proprietor: Beheermaatschappij Schuitemaker B.V., 7461 AG Rijssen (NL)
(72) Inventor: Thijert, Stephan Herman Jan, 7597 MJ, Saasveld (NL)
(74) Representative: V.O.

(56) References cited:
- EP-A2- 1 452 087
- DE-U1- 20 217 399

## Description

### FIELD AND BACKGROUND OF THE INVENTION

The invention relates to a method according to the introductory portion of claim 1 and to an apparatus according to the introductory portion of claim 11. Such a method and apparatus are known from European patent application 1 452 087.

From European patent specification 0 092 880 and from German patent application 34 32 278, other methods and apparatuses for cutting silage from a silage pile are known.

Silage is ensilaged cattle feed stored in a somewhat compressed form, for instance in a so-called silage pile into which the feed has been transported by tractor or a shovel, or in which previously compressed feed is stored. The silage pile is sealed off substantially air-tightly. In the silage pile, the ensilaged product undergoes a biochemical process, whereby the product remains well preserved. The compression and air-tight sealing of the silage pile is important to prevent decay and mould formation.

In practice, silage piles have a size such that the silage stored therein cannot be transported in one go to a feed silo from whence it can be dispensed in dosed manner for feeding the cattle. When the storage silo is too large, the feed loosened upon transferral to the storage silo decays. Additionally, it is known to mix feed in a feeder wagon from which the animals can be fed. Both when using a feeder wagon and when feeding from a silo, the feed is taken portion-wise from the silage pile.

It is therefore advantageous when every time silage is transferred from the silage pile to the stable or to an intermediate storage silo, relatively little silage is mixed and/or transferred. However, this is a labour-intensive operation. Automated silage removal allows for the silage to be taken in small portions without inconvenience and for use of a silage cutter with a relatively small capacity, as the silage removing cycle requires no working hours. However, automated silage removal without human supervision entails a risk of people and animals getting hurt, in particular if a person or animal is in the area of a trajectory of a cutting element of the silage cutter and, due to circumstances, is not able to leave the area in time. An animal may have gone to sleep in the cutting area or a person or an animal may have become indisposed or hurt or trapped. Furthermore, objects, such as a pitch fork, left behind in the cutting area, can damage the silage cutter.

### SUMMARY OF THE INVENTION

It is an object of the invention to provide a solution, whereby, upon automated removal of silage, the risk of a person or animal getting hurt and the risk of damage to the silage cutter is limited.

According to the invention, this object is achieved by providing a method according to claim 1. The invention can also be embodied by an apparatus according to claim 11.

As each time during a silage removing cycle, prior to bringing the cutting element to the cutting position, the first scanning result is compared to the second scanning result of a last, preceding silage removing cycle and, in response to a difference between the first and the second scanning result which exceeds a predetermined limit value, the silage removing cycle is stopped before cutting, in the event a person, an animal or object is present in or near the cutting trajectory, a silage removing cycle is stopped before the cutting of silage from the silage pile has started.

Particular design aspects are laid down in the dependent claims.

In the following, the invention is further illustrated and elucidated on the basis of a few exemplary embodiments with reference to the drawing.

### BRIEF DESCRIPTION OF THE DRAWING

Fig. 1 is a perspective view of an example of an apparatus according to the invention;
Fig. 2 is an enlarged perspective representation of a portion II of the apparatus according to Fig. 1;
Fig. 3 is an exploded, schematic representation in side view of an example of an apparatus according to the invention as shown in Figs. 1 and 2 and a silage pile;
Fig. 4 is a perspective representation of the apparatus according to Figs. 1-3 and the silage pile according to Fig. 3; and
Fig. 5 is a schematic representation of an example of a structure for controlling and operating an apparatus according to the invention.

### DETAILED DESCRIPTION

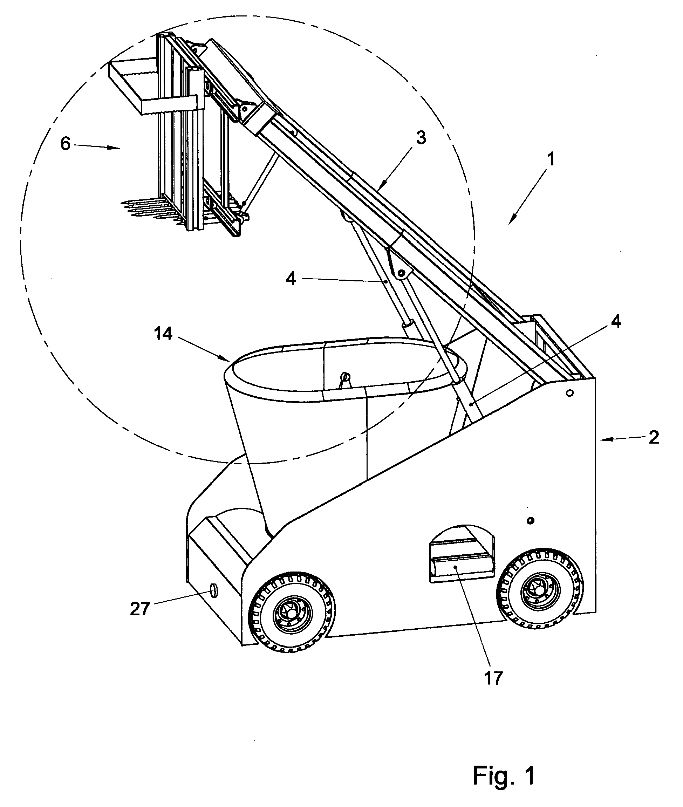

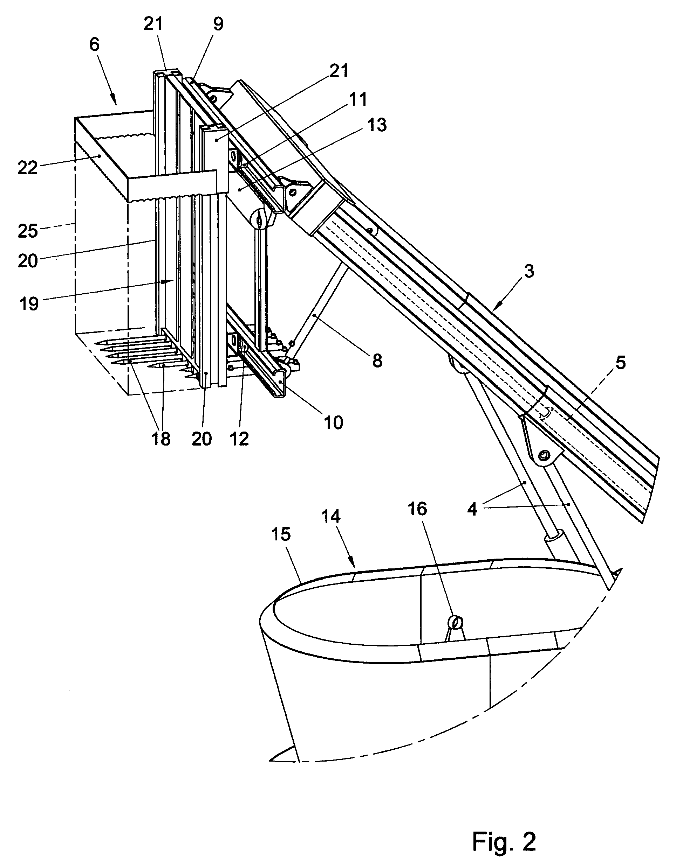

In Figs. 1 and 2, an apparatus according to the invention is represented in the form of a vehicle 1. The vehicle 1 has an automotive chassis 2 and an arm 3 borne by the chassis 3 and telescopically and pivotally movable relative to the chassis, with operating arms in the form of hydraulic cylinders 4, 5 for pivotally raising and lowering or telescopically lengthening and shortening the arm 3. The chassis 2 and the arm 3 form a bearing structure, bearing a silage cutter in the form of a silage cutter 6 movable through movement of the arm 3 and through tilting relative to the arm 3. The silage cutter 6 is pivotally suspended relative to the arm 3, while the angle of the silage cutter 6 relative to the arm 3 is governed by a hydraulic cylinder 8. For lateral movement of the silage cutter 6 relative to the chassis, transverse guide rails 9, 10 are provided in which rollers 11, 12, respectively, of the silage cutter 6 can roll back and forth. Sideways movement of the silage cutter can be operated by a hydraulic cylinder 13 mounted between the assembly and the silage cutter 6.

A motor, hydraulic pump, hydraulic lines, pressure vessels and valves which, according to this example, also form part of the driving structure for driving movements of the arm and for rotation and control of wheels bearing the chassis, are parts known per se and not represented from a point of view of convenience.

The vehicle 1 is further provided with a storage holder 14 with a bin 15, a mixing element in the form of a helix 16 and means for discharging feed from the storage holder 14, which discharge means, according to this example, are designed as a conveyor belt 17.

The silage cutter 6 has a silage cutter frame 19 which also forms a support for supporting cut-out packs of silage in rearward direction. Furthermore, the silage cutter frame 19 bears a row of pins 18 (not all pins are indicated with a reference numeral) located side by side in a condition of use, which project forward from the silage cutter frame 19, while the silage cutter frame 19 extends upwards from the pins 18 for rearward support of a cut-out pack of silage resting on the pins 18.

According to the example shown, the silage cutter is provided with drives 23 in the form of hydraulic cylinders 23 for driving axial movements of the pins 18 relative to the silage cutter frame 19. The hydraulic cylinders 23 are oriented in longitudinal direction of the pins 18, have a fixed part relative to the silage cutter frame 19 and each have a part coupled to a pin 18 and movable in longitudinal direction of this pin 18.

The silage cutter frame 19 is further provided with guides 20 in which runners 21 are reciprocally movable and which bear a knife 22 for cutting silage. The knife 22 is vertically movable in an area in front of the silage cutter frame 19 according to a cutting trajectory.

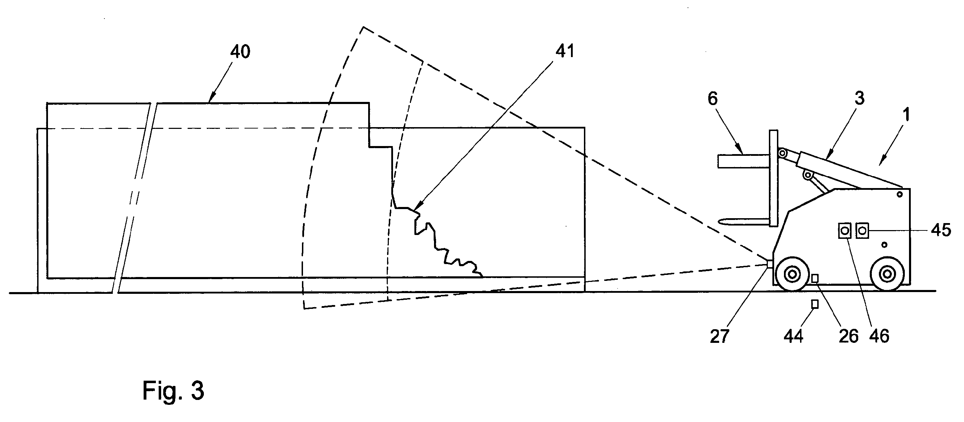

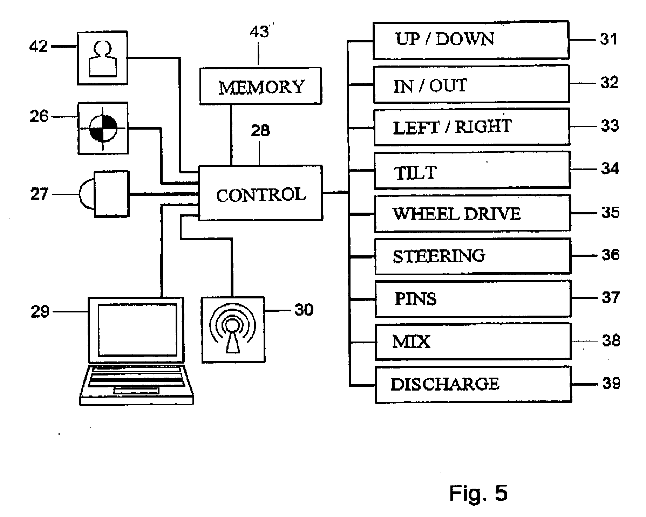

According to this example, the vehicle 1 according to this example is automotive and self-steering and is equipped for navigation with a navigator unit (26) (see Figs. 3 and 5) with a transmitter and a receiver for receiving signals from transponders which modulate a signal transmitted by the transmitter. Based on the modulation received by the receiver, the position of the vehicle can be determined. Such systems are known per se and commercially available and therefor not further described and illustrated. For controlling the driving structure, the apparatus is equipped with a control 28 and an input interface in the form of a laser scanner 27. Such laser scanners are commercially available, for instance from SICK AG of Waldkirch, Germany. In operation, for transferring data, obtained from the laser scanner 27 during scanning, to the control 28, form data representing the form of the front part of a silage pile can be entered into the control. For entering dosing data representing a predetermined amount of silage, a user interface 29 with a keyboard and a display are coupled to the control 28. In addition, dosing data and other data, such as system settings, log data and updates of control software can be exchanged with the control and via a wireless data transfer unit 30. According to the example, this is designed as a transmitter/receiver according to IEEE 802.11 norm (WiFi), via which the control 28 can be included in a computer network.

The control 28 is further coupled to valve controls of subsystems 31- 36 for positioning the silage cutter 6 and of subsystems 37-39 for operating other functions of the apparatus.

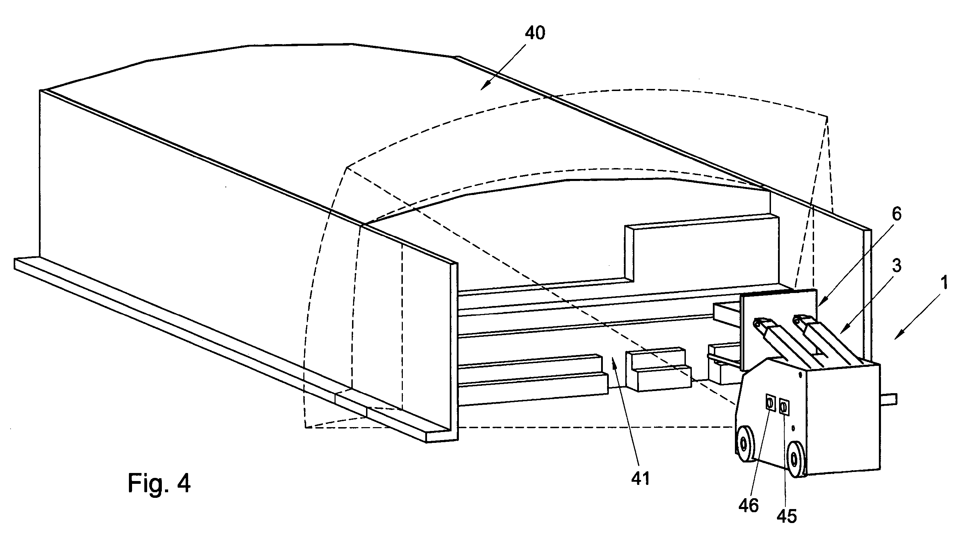

In the following, the operation of the apparatus 1 according to the example shown is elucidated with reference to Figs. 3 and 4.

Prior to a silage removing cycle, first, dosing data are entered that indicate, *inter alia*, how much silage is required from the silage pile 40. When the silage removing cycle is not the first cycle for removing feed from a particular silage pile, also, form data are available representing the form of the front of the silage pile or at least of a relevant portion thereof after removal of feed during a last, preceding silage removing cycle, and which have been obtained by scanning after silage removing during a last, preceding silage removing cycle. The dosing data can come from, *inter alia*, a livestock management program that runs on a fixedly disposed computer of a cattle farm and be entered via the WiFi module 30 into the control 28. The form data obtained after silage removing during a last, preceding silage removing cycle are stored in a memory 43 present in the vehicle 1 and connected to the control 28. However, the form data can also be stored in a fixedly disposed memory and/or be processed in a fixedly disposed base station.

According to this example, the silage removing cycle starts with the vehicle driving from a location where silage has been removed, via a preprogrammed path, to a scanning position at a particular distance from the silage pile 40.

Then, a front part 41 of the silage pile is scanned by a laser scanner 27. In the scanning position, the vehicle 1 is located at a distance from the silage pile 40 sufficient for having at least the portion of the front 41 of the silage pile 40 fall within a working area 42 of the laser scanner 27. Through scanning, a scanning result in accordance with measuring signals obtained by scanning is transferred from the scanner 27 to the control 28 which, starting from the scanning result, calculates form data representing an initial form of the front part 41 of the silage pile 40.

According to this example, the scanner 47 is in a low position relatively close above the ground. It is also possible to hold the scanner during scanning in a position that is largely above the height of the chassis 2, for instance by attaching the scanner near a free end of the arm 3 to the arm 3 or to the silage cutter frame 19. Positioning the scanner this high also enables scanning of the top side of the silage pile and reduces the susceptibility to disturbance through sunlight *etc.*

During driving, the scanner 27 can also serve as safety for preventing the apparatus from colliding into obstacles when driving between the silage pile and the destination for the cut-out silage. As soon as, during driving, an obstacle is detected in the warning part of the scanning area, the speed of the vehicle 1 is considerably reduced and the vehicle 1 stops when the obstacle comes within a certain distance.

Starting from the form data and the dosing data, cutting position data are calculated representing a cutting position of the silage cutter frame 19, while it holds that the cutting trajectory 25 of the knife 22 moving relative to the silage cutter frame 19 is located such that a calculated amount of silage between the cutting trajectory 25 associated to the calculated cutting position and an outer surface portion of the front part 41 of the silage pile 40 represented by the form data equals the amount of silage represented by the dosing data.

This calculation can result in, for instance, calculating a cutting position that is such that the space between the cutting trajectory 25 and the silage cutter frame 19 is not completely filled. To that end, the cutting position may be selected such that cutting takes place from a portion of the silage pile with a vertical front wall and a horizontal top surface, while the silage cutter frame 19 in the cutting position abuts against the vertical front wall portion of the silage pile 40 and the horizontal top surface being at a distance equal to a particular fraction of the length of the cutting trajectory 25 above the pins 18.

Another option is to cut the silage loose over the entire height of the cutting trajectory but to select the cutting position such that the knife 22 reaches into the silage pile 40 only over a part of the maximum cutting depth.

The silage can also be cut from a multi-stage or inclining portion of the silage pile 40. Here, the inclined configuration of the outer surface of the silage to be cut out is taken into account when calculating a cutting position.

Then, the control 28 controls the movement of the silage cutter frame 19 to the cutting position represented by the calculated cutting position data and, after that, the movement of the knife 22 along the cutting trajectory 25 while the silage cutter frame 19 is held in the cutting position. Thus, taking into account tolerances at least acceptable for dosing of silage, the predetermined amount of silage is cut from the silage pile 40.

Then, the cut-off silage is poured into the holder 14 by retracting the silage cutter and/or pivoting the silage cutter 6 upward and tilting it, and/or retracting the silage pins 18. The control 28 drives the mixer 16 at suitable points in time for mixing the silage poured into the holder, which silage may come from different silage piles containing different sorts of silage. Putting the mixer 16 in operation before all silage to be mixed has been collected can contribute to spreading the silage over the holder 14, so that the content thereof can be used for a large part without the silage locally becoming heaped up so high that it falls over the rim.

The silage that has been cut loose and poured into the holder 14 is discharged from the silage pile 40 by having the vehicle 1 the holder 14 forms part of drive away from the silage pile 40, for instance towards the stable or to a silo for intermediate storage of the unloaded feed.

Before the vehicle 1 drives away from the silage pile 40, the front part 41 of the silage pile 40 is scanned again. This results in a second scanning result in accordance with measuring results obtained through scanning. Starting from this second scanning result, second form data are calculated representing the form of the front part 41 of the silage pile 40 after cutting. These form data are also stored in the memory 43.

According to this example, the scan cycle ends with the silage which has been cut loose and loaded and mixed in the holder 14 being unloaded in the stable or in a silo for intermediate storage of the supplied silage.

During a silage removing cycle, each time before the cutting element 22 is brought to the first cutting position, the first form data are compared to the second form data obtained during a last, preceding silage removing cycle. When the difference between the first and the second form data exceeds a predetermined limit value, the silage removing cycle is stopped prior to cutting.

In this manner, the risk of persons or animals present in the cutting trajectory getting hurt and of damage through objects other than silage present in the cutting trajectory is considerably reduced.

Furthermore, the scanner and the equipment which serves for determining the cutting trajectory can also be used for identifying changes in the area of the front end of the silage pile 40.

When a silage removing cycle is a first silage removing cycle of a particular silage pile, no scanning result obtained during a last, preceding silage removing will be available yet. However, when starting a first silage removing cycle, a person needs to be present for operating the apparatus for starting the first silage removing cycle. This person can supervise and release the cutting operation. Therefore, it is preferred that during a first silage removing cycle of removing silage from a silage pile, the step of comparing to form data obtained during a previous silage removing cycle is skipped.

Also after manually removing silage, or manipulating silage in another manner, comparing form data to form data obtained during a last preceding silage removing cycle can be skipped by operating an operating element. Preferably, it is then required that the vehicle 1 is in the scanning position and the operating element is on or near the vehicle, in order that skipping the safety step of comparing the form data is possible only if a person operating the apparatus 1 is present in the proximity of the cutting area in order to supervise the safe start of the silage cutting.

It is possible to process only a particular portion of a scanning result into form data or to only compare a particular portion of the form data to form data obtained through scanning during a last, preceding silage removing cycle. Thus, changes of the observed form in an area of the silage pile 40 which is not relevant to the safety or to prevention of damages are not taken into account.

The difference compared to the limit value is preferably a summation of absolute values of measured form changes in subareas of the front part of the silage pile 40. The subareas can for instance form sections with sides smaller than 5 cm from a grid. Here, the limit value can be selected such that it corresponds with a measured total absolute volume change which is greater than for instance 2 dm³ or 5 dm³, which approximately corresponds to the volume of a chicken or cat. In addition, also, a distance over which a change is observed can be used as criterion, so that slim objects such as a pitch fork can be detected. To this end, the rule can be set that an uninterrupted increase of volume over a distance of at least half a meter or al least one meter gives rise to interruption of a silage removing cycle.

By assigning a greater weighting factor to measured form changes that represent an increase of a silage pile volume than to form changes that represent a decrease of silage pile volume, the sensitivity of the safety can be set such that it does not react to small amounts of manually removed silage. Here, manually removing a small amount of silage that is for instance manually fed to one or more separately kept animals does not lead to interruptions of a subsequent silage removing cycle.

For an accurate comparison of the form of the front end of the silage pile 40 immediately after a silage removing cycle and at the start of a subsequent silage removing cycle, it is advantageous if, during scanning for obtaining a first scanning result, the silage cutter 6 or at least the chassis 2, is each time at the same location as during scanning for obtaining the second scanning result from the last, preceding silage removing cycle.

This can be realised in a simple manner by ensuring that during scanning, the silage cutter 6 or at least the chassis 2 is each time in the same position.

If a silage removing cycle has stopped in response to a difference between the first form data calculated during one silage removing cycle and the second form data of a last, preceding silage removing cycle, which difference exceeds a particular limit value, it should be checked whether indeed a dangerous situation has occurred, and, if this is the case, measures should be taken to terminate this dangerous situation, for instance by removing a person, animal or object from the area of the cutting trajectory.

However, the observed form change which has lead to the interruption of a silage removing cycle can have many causes. For instance, feed may have been taken from the silage pile manually, silage may have crumbled from the silage pile, covering plastic may have been blown in front of the pile, etc. If it appears that the silage removing cycle has stopped as a consequence of a change in form in the front part of the silage pile due to, for instance, wind, rain or manual removal of silage, the interrupted silage removing cycle can be immediately resumed.

According to this example, resuming the interrupted silage removing cycle in response to a release signal generated in response to operation of an operating element 45 is done by a person. When resuming a silage removing cycle is carried out in response to an operating command of a person, this is made dependent on approval by a person who has had the occasion of observing the situation in this area of the cutting trajectory.

To guarantee that the person who operates the operating element 45 has been able to inspect the area of the cutting trajectory from close up, the operating element is designed as part of the vehicle 1. When the operating element 45 is designed as a remote control, if is preferably designed such that a command to resume a silage removing cycle becomes effective only when the operating element is close to the vehicle, for instance within a distance of approximately 5 meters. This can for instance be achieved by designing the communication means for communication between the remote control and the control 28 in a suitable manner, for instance as wireless communication means according to IEEE 802.15 (Bluetooth) norm or as infrared connection with a limited reach.

In order to warn a person who can operate the apparatus that a silage removing cycle has been interrupted, in response to the interruption of a silage removing cycle, preferably, an alarm signal is generated that is received by a receiver carried by the user. The receiver can be integrated in, for instance, the remote control or be a mobile phone. In the latter case, the vehicle can for instance be equipped with a transmitter/receiver according to a mobile telephone standard and the control 28 may be designed to generate as alarm signal a signal that is converted by the transmitter/receiver into a text message.

The navigation unit can be designed for following lines, such as optically detectable lines or guides arranged in the ground and which cause an electric field, or transponders, as is known per se in the field of automotive vehicles in factories and in logistic centers.

According to the present example, the sensor 26 coupled to the control 28 for receiving position related signals is placed so as to accurately detect a beacon 44 specifically disposed for determining a scanning position of the vehicle 1. The control 28 is designed to each time carry out scanning operations from this scanning position. The beacon 44 is located in the ground in a position under the vehicle 1 when the vehicle 1 is in the scanning position. This enables particularly accurate determination of the scanning position, which, in turn, leads to a more accurate comparison of the form data obtained by means of the scanning to form data obtained during a preceding scan, so that changes in the area of the front part of the silage pile 40 can be detected more accurately, and reactions to smaller changes can be responded to and/or less false alarms are received of changes as a result of measuring mistakes.

For determining the scanning position and different positions of the vehicle for cutting silage, in front of the front part of the silage pile, in addition to a beacon such as the beacon 46, several tracks formed by rows of transponders or other types of beacons may have been provided. Then, when driving towards the cutting position and back, the control 28 can be programmed, depending on the intended cutting position, to follow one specific track and, each time before scanning, to select a position on a predetermined location along a particular one (for instance a middle one) of the tracks. Preferably, the vehicle is further provided with a gyroscope to guarantee that during scanning, it is each time in the same orientation.

For controlling and driving the subsystems, instead of hydraulic controls and transmissions, also, mechanically controllable couplings and transmissions and/or individually controllable motors, such as electronic motors, can be used.

The silage cutter can also be designed as a silage gripper, for instance as a silage gripper with a gripper element, a bottom of which forms a knife and which is movable along a trajectory of a segment of a circle, or the teeth of which have sharp and therefore knife-shaped ends. With such silage grippers, when picking up a portion of the ensilaged silage the knife cuts a portion free and a portion of the silage is held between the knife and the supports. The silage cutter can also be designed with a cutter element in the form of a silage rotary tiller.

As an alternative, the bearing structure that bears the silage cutter can also be designed to be stationary and have a fixed portion placed at a fixed place relative to a silage store location. Here, the apparatus can optionally be designed to be relatively easily transferrable to another silage storage location. Then, for discharging the cut-off silage from the silage pile, a separate transport means or several separate transport means are used. Such a separate transport means can be automotive or driven or moved through human interference. Thus, in such a context, rolling containers can for instance be used as transport means, which are moved by means of a tractor or a return conveyor or which are provided with their own drive and/or control.

For a particularly accurate scanning of the surface of the silage pile facing the apparatus, it is advantageous if the scanner for scanning a surface portion of the silage pile facing the apparatus is located at a fixed position relative to the silage pile. This can be achieved, for instance, by fixedly mounting the scanner, mounting it on a silage cutter which is located at a fixed location relative to the silage pile or by mounting the scanner on a silage cutter which is movable between several silage piles, but remains behind at the silage pile when the unloaded silage is discharged.

In particular if the scanner is at a fixed location, it is of great importance that the scanner is well placed and directed, in order that it actually scans the surface portion of the silage pile from which silage is taken facing the apparatus. In order to prevent the silage cutter from being released with an incorrectly set scanner, each time during a silage removing cycle, before the cutting element is brought to the cutting position, the first form data obtained during a last, preceding silage removing cycle can be compared to the second form data obtained during this last, preceding cycle. If the difference between the first form data obtained during the last, preceding silage removing cycle and the second form data obtained during the last, preceding silage removing cycle, is below a predetermined limit value, this forms an indication that the scanner does not observe the area of the silage pile from which silage has been removed. Therefore, in response to a difference below the limit value a warning signal is generated. This warning signal preferably results in that the silage cutter is not driven for cutting silage loose. The warning signal can also be the omission of a releasing signal. Then, after having set the scanner, the user can still, via an operating panel, release the control of the silage cutter for cutting the silage.

## Claims

1. A method for cutting or milling silage from a front part (41) of a silage pile (40), utilizing a silage cutting apparatus (1) comprising a bearing structure (2, 3), a silage cutter (6) borne by the bearing structure (2, 3) and having a silage cutter frame (19) and at least one cutting element (22) movable relative to the frame along a cutting trajectory (25), wherein, each time, a silage removing cycle comprises:
a. scanning at least a portion of the front part (41) of the silage pile (40), generating a first scanning result in accordance with measuring signals obtained by scanning, and, starting from the scanning result, calculating first form data representing an initial form of the front part (41) of the silage pile (40);
b. starting from the scanning result, calculating cutting position data which represent a cutting position of the silage cutter frame (19) and the cutting trajectory (25) of the cutting element (22);
c. bringing the silage cutter frame (19) to the cutting position represented by the calculated cutting position data;
d. moving the cutting element (22) along the cutting trajectory (25) with the silage cutter frame (19) in the reached cutting position, whereby a predetermined amount of silage is cut off from the silage pile (40); and
e. discharging the cut-off amount of silage from the silage pile (40) by moving the bearing structure (2, 3);
**characterized in that** the silage removing cycle further comprises:
f. scanning at least a portion of the front part (41) of the silage pile (40), generating a second scanning result in accordance with measuring signals obtained by scanning, and, starting from the second scanning result, calculating second form data representing the form of the front part (41) of the silage pile (40) after cutting;
wherein each time during a silage removing cycle, prior to bringing the cutting element (22) to the cutting position, the first form data are compared to the second form data obtained during a last, preceding silage removing cycle and, in response to a difference between the first and the second form data that exceeds a predetermined limit value, the silage removing cycle is stopped prior to cutting.

2. A method according to claim 1, wherein the difference compared to the limit value is a summation of absolute values of measured form changes.

3. A method according to claim 1 or 2, wherein a greater weighting factor is assigned to measured form changes representing an increase of a silage pile volume than to form changes representing a decrease of silage pile volume.

4. A method according to any one of the preceding claims, wherein during scanning for obtaining a first scanning result, at least a chassis (2) of the bearing structure (2, 3) is each time located at the same position as during scanning for obtaining the second scanning result from the last, preceding silage removing cycle.

5. A method according to claim 4, wherein during scanning, the chassis (2) is each time at the same position.

6. A method according to any one of the preceding claims, wherein after stopping of a silage removing cycle in response to a difference between the first and the second scanning results that exceeds a predetermined limit value, the silage removing cycle is resumed in response to a release signal generated in response to operation of an operating element by a user.

7. A method according to claim 6, wherein the operating element is located within a limited distance from the bearing structure (2, 3) or forms part thereof.

8. A method according to any one of the preceding claims, wherein in response to a silage removing cycle stopping, an alarm signal is generated which is received by a receiver carried by the user.

9. A method according to any one of the preceding claims, wherein each time during a silage removing cycle, before the cutting element (22) is brought to the cutting position, the first form data obtained during a last, preceding silage removing cycle are compared to the second form data obtained during said last, preceding silage removing cycle and, in response to a difference between the first form data obtained during the last, preceding silage removing cycle and the second form data obtained during the last, preceding silage removing cycle, that is below a predetermined limit value, a warning signal is generated.

10. A method according to claim 9, wherein in response to said warning signal, the silage removing cycle is stopped prior to cutting.

11. An apparatus for cutting silage from a front part (41) of a silage pile (40), comprising:
a silage cutter (6) having a silage cutter frame (19) and a cutting element (22) movable relative to the silage cutter frame (19) along a cutting trajectory (25);
an automotive bearing structure (2, 3) having a portion (3) movable in operating condition relative to the silage pile (40) which bears the silage cutter (6) and a driving structure (4, 5) for driving movement of the movable portion (3) relative to the silage pile (40);
a scanner (27) for scanning a surface portion of a silage pile (40) facing the apparatus (1), and for generating a scanning result in accordance with measuring signals obtained through scanning;
a control (28) connected to the scanner (27) for, starting from the scanning result, calculating form data representing the form of the front part (41) of the silage pile (40);
wherein the control (28) is designed for:
controlling said driving structure (4, 5); and
each time traversing a silage removing cycle comprising:
a. scanning at least a portion of the front part (41) of the silage pile (40), generating a first scanning result in accordance with measuring signals obtained through scanning, and, starting from the scanning result, calculating first form data representing an initial form of the front part (41) of the silage pile (40);
b. starting from the scanning result, calculating cutting position data representing a cutting position of the silage cutter frame (19) and the cutting trajectory (25) of the cutting element (22);
c. bringing the silage cutter frame (19) to the cutting position represented by the calculated cutting position data;
d. moving the cutting element (22) along the cutting trajectory (25) while the silage cutter frame (19) is in the reached cutting position, whereby a predetermined amount of silage is cut off from the silage pile (40); and
e. discharging the cut-off amount of silage from the silage pile (40) by moving the bearing structure (2, 3);
**characterized in that** the silage removing cycle further comprises:
f. scanning at least a portion of the front part (41) of the silage pile (40), generating a second scanning result in accordance with measuring signals obtained by scanning, and, starting from the second scanning result, calculating second form data representing the form of the front part (41) of the silage pile (40) after cutting;
wherein each time during a silage removing cycle, before bringing the cutting element (22) to the cutting position, the first form data are compared to the second form data obtained during a last, preceding silage removing cycle, and, in response to a difference between the first and the second form data that exceeds a predetermined limit value, the silage removing cycle is stopped prior to cutting.

12. An apparatus according to claim 11, wherein the bearing structure (2, 3) is provided with at least one sensor (26) operatively connected to the control (28) for receiving position related signals.

13. A system comprising an apparatus according to claim 12, further comprising at least one beacon (44) detectable by the at least one sensor, for determining a scanning position, wherein the control is designed for each time causing the scanning to be carried out from the scanning position.

14. A system according to claim 13, wherein the beacon (44) is in the ground in a position which, if the apparatus (1) is in the scanning position, is located below the apparatus (1).

## Patentansprüche

1. Verfahren zum Schneiden oder Fräsen von Silage von einem vorderen Teil (41) eines Silagestapels (40) unter Verwendung einer Silage-Schneidevorrichtung (1), umfassend eine Lagerstruktur (2, 3), einen Silageschneider (6), getragen von der Lagerstruktur (2, 3) und mit einem Silage-Schneiderahmen (19) und mindestens einem Schneideelement (22), das in Bezug auf den Rahmen entlang eines Schneideweges (25) beweglich ist, wobei ein Silage-Entfernungszyklus jedes Mal umfasst, dass:
a. mindestens ein Abschnitt des vorderen Teils (41) des Silagestapels (40) gescannt wird, um ein erstes Scanergebnis entsprechend Messsignalen, erhalten durch das Scannen, zu erzeugen, und ausgehend von dem Scanergebnis erste Formdaten, die eine Ausgangsform des vorderen Teils (41) des Silagestapels (40) darstellen, berechnet werden;
b. ausgehend vom Scanergebnis Schneidepositionsdaten berechnet werden, die eine Schneideposition des Silage-Schneiderahmens (19) und des Schneideweges (25) des Schneideelements (22) darstellen;
c. der Silage-Schneiderahmen (19) zu der Schneideposition, dargestellt durch die berechneten Schneidepositionsdaten, gebracht wird;
d. das Schneideelement (22) entlang des Schneideweges (25) bewegt wird, während der Silage-Schneiderahmen (19) in der erreichten Schneideposition ist, wobei eine vorbestimmte Silagemenge von dem Silagestapel (40) abgeschnitten wird;
e. die von dem Silagestapel (40) abgeschnittene Silagemenge durch Bewegen der Lagerstruktur (2, 3) abgeführt wird;
**dadurch gekennzeichnet, dass** der Silage-Entfernungszyklus ferner umfasst, dass:
f. mindestens ein Abschnitt des vorderen Teils (41) des Silagestapels (40) gescannt wird, um ein zweites Scanergebnis entsprechend den durch Scannen erhaltenen Messsignalen zu erhalten, und ausgehend von dem zweiten Scanergebnis zweite Formdaten berechnet werden, die die Form des vorderen Teils (41) des Silagestapels (40) nach dem Schneiden darstellen;
wobei jedes Mal während eines Silage-Entfernungszyklus, bevor das Schneideelement (22) in die Schneideposition gebracht wird, die ersten Formdaten mit den zweiten Formdaten, erhalten während eines letzten vorhergehenden Silage-Entfernungszyklus, verglichen werden, und in Reaktion auf eine Differenz zwischen den ersten und den zweiten Formdaten, die einen vorbestimmten Grenzwert überschreitet, der Silage-Entfernungszyklus vor dem Schneiden gestoppt wird.

2. Verfahren nach Anspruch 1, wobei die Differenz, verglichen mit dem Grenzwert, eine Aufsummierung absoluter Werte gemessener Formveränderungen ist.

3. Verfahren nach Anspruch 1 oder 2, wobei gemessenen Formveränderungen, die eine Zunahme des Volumens eines Silagestapels darstellen, ein größerer Gewichtungswert gegeben wird als Formveränderungen, die eine Abnahme des Volumens eines Silagestapels darstellen.

4. Verfahren nach einem der vorhergehenden Ansprüche, wobei beim Scannen zum Erhalten eines ersten Scanergebnisses mindestens ein Gestell (2) der Lagerstruktur (2, 3) jedes Mal an derselben Position angeordnet ist wie beim Scannen zum Erhalten des zweiten Messergebnisses von dem letzten vorhergehenden Silage-Entfernungszyklus.

5. Verfahren nach Anspruch 4, wobei beim Scannen das Gestell (2) jedes Mal an derselben Position ist.

6. Verfahren nach einem der vorhergehenden Ansprüche, wobei nach dem Stoppen des Silage-Entfernungszyklus in Reaktion auf eine Differenz zwischen den ersten und den zweiten Scanergebnissen, die einen vorbestimmten Grenzwert überschreitet, der Silage-Entfernungszyklus in Reaktion auf ein Freigabesignal, erzeugt in Reaktion auf die Betätigung eines Bedienelements durch einen Nutzer wiederaufgenommen wird.

7. Verfahren nach Anspruch 6, wobei das Bedienelement innerhalb eines begrenzten Abstands von der Lagerstruktur (2, 3) angeordnet ist oder einen Teil davon bildet.

8. Verfahren nach einem der vorhergehenden Ansprüche, wobei in Reaktion auf ein Stoppen eines Silage-Entfernungszyklus ein Alarmsignal erzeugt wird, das von einem Empfänger, den der Benutzer trägt, empfangen wird.

9. Verfahren nach einem der vorhergehenden Ansprüche, wobei jedes Mal während eines Silage-Entfernungszyklus, bevor das Schneideelement (22) zu der Schneideposition gebracht wird, die ersten Formdaten, erhalten während eines letzten vorhergehenden Silage-Entfernungszyklus, mit den zweiten Formdaten, erhalten während des letzten vorhergehenden Silage-Entfernungszyklus, verglichen werden und in Reaktion auf eine Differenz zwischen den ersten Formdaten, erhalten während des letzten vorhergehenden Silage-Entfernungszyklus, und den zweiten Formdaten, erhalten während des letzten vorhergehenden Silage-Entfernungszyklus, die unter einem vorbestimmten Grenzwert ist, ein Warnsignal erzeugt wird.

10. Verfahren nach Anspruch 9, wobei in Reaktion auf das Warnsignal der Silage-Entfernungszyklus vor dem Schneiden gestoppt wird.

11. Vorrichtung zum Schneiden von Silage von einem vorderen Teil (41) eines Silagestapels (40), umfassend:
einen Silageschneider (6) mit einem Silage-Schneiderahmen (19) und einem Schneideelement (22), das zu dem Silage-Schneiderahmen (19) entlang eines Schneideweges (25) beweglich ist;
eine automatisierte Lagerstruktur (2, 3) mit einem Abschnitt (3), der im Betriebszustand zu dem Silagestapel (40) beweglich ist, die den Silageschneider (6) und eine Antriebsstruktur (4, 5) zur Antriebsbewegung des zu dem Silagestapel (40) beweglichen Abschnitts (3) trägt;
einen Scanner (27) zum Scannen eines Oberflächenabschnitts eines Silagestapels (40) gegenüber der Vorrichtung (1) und zum Erzeugen eines Scanergebnisses entsprechend Messsignalen, erhalten durch Scannen;
eine Steuerung (28), verbunden mit dem Scanner (27), um ausgehend von dem Scanergebnis Formdaten zu berechnen, die die Form des vorderen Teils (41) des Silagestapels (40) darstellen;
wobei die Steuerung (28) konzipiert ist, um:
die Antriebsstruktur (4, 5) zu steuern; und
jedes Mal einen Silage-Entfernungszyklus zu durchlaufen, der umfasst, dass:
a. mindestens ein Abschnitt des vorderen Teils (41) des Silagestapels (40) gescannt wird, um ein erstes Scanergebnis entsprechend Messsignalen, erhalten durch Scannen, zu erzeugen, und ausgehend von dem Scanergebnis erste Formdaten, die eine Ausgangsform des vorderen Teils (41) des Silagestapels (40) darstellen, berechnet werden;
b. ausgehend vom Scanergebnis Schneidepositionsdaten berechnet werden, die eine Schneideposition des Silage-Schneiderahmens (19) und des Schneideweges (25) des Schneideelements (22) darstellen;
c. der Silage-Schneiderahmen (19) zu der Schneideposition, dargestellt durch die berechneten Schneidepositionsdaten, gebracht wird;
d. das Schneideelement (22) entlang des Schneideweges (25) bewegt wird, während der Silage-Schneiderahmen (19) in der erreichten Schneideposition ist, wobei eine vorbestimmte Menge Silage von dem Silagestapel (40) abgeschnitten wird;
e. die von dem Silagestapel (40) abgeschnittene Silagemenge durch Bewegen der Lagerstruktur (2, 3) abgeführt wird;
**dadurch gekennzeichnet, dass** der Silage-Entfernungszyklus ferner umfasst, dass:
f. mindestens ein Abschnitt des vorderen Teils (41) des Silagestapels (40) gescannt wird, um ein zweites Scanergebnis entsprechend den durch Scannen erhaltenen Messsignalen zu erhalten, und ausgehend von dem zweiten Scanergebnis zweite Formdaten berechnet werden, die die Form des vorderen Teils (41) des Silagestapels (40) nach dem Schneiden darstellen;
wobei jedes Mal während eines Silage-Entfernungszyklus, bevor das Schneideelement (22) in die Schneideposition gebracht wird, die ersten Formdaten mit den zweiten Formdaten, erhalten während eines letzten vorhergehenden Silage-Entfernungszyklus, verglichen werden, und in Reaktion auf eine Differenz zwischen den ersten und den zweiten Formdaten, die einen vorbestimmten Grenzwert überschreitet, der Silage-Entfernungszyklus vor dem Schneiden gestoppt wird.

12. Vorrichtung nach Anspruch 11, wobei die Lagerstruktur (2, 3) mit mindestens einem Sensor (26) versehen ist, der operativ mit der Steuerung (28) verbunden ist, um positionsbezogene Signale zu empfangen.

13. System, umfassend eine Vorrichtung nach Anspruch 12, ferner umfassend mindestens eine Bake (44), erkennbar durch den mindestens einen Sensor, zum Bestimmen einer Scanposition, wobei die Steuerung konzipiert ist, um zu veranlassen, dass das Scannen jedes Mal von der Scanposition aus durchgeführt wird.

14. System nach Anspruch 13, wobei die Bake (44) im Boden in einer Position ist, die, wenn die Vorrichtung (1) in der Scanposition ist, unter der Vorrichtung (1) angeordnet ist.

## Revendications

1. Procédé pour couper ou broyer du fourrage vert à partir d'une partie avant (41) d'un tas de fourrage vert (40), en utilisant un appareil de coupe de fourrage vert (1) comprenant une structure de support (2, 3), un élément de coupe de fourrage vert (6) supporté par la structure de support (2, 3) et comportant un cadre d'élément de coupe de fourrage vert (19) et au moins un élément de coupe (22) pouvant être déplacé par rapport au cadre le long d'une trajectoire de coupe (25), dans lequel, à chaque fois, un cycle de retrait de fourrage vert comprend :
a. le balayage d'au moins une partie de la partie avant (41) du tas de fourrage vert (40), la génération d'un premier résultat de balayage conformément aux signaux de mesure obtenus par le balayage, et, en commençant à partir du résultat de balayage, le calcul de premières données de forme représentant une forme initiale de la partie avant (41) du tas de fourrage vert (40) ;
b. en commençant à partir du résultat de balayage, le calcul de données de position de coupe qui représentent une position de coupe du cadre d'élément de coupe de fourrage vert (19) et de la trajectoire de coupe (25) de l'élément de coupe (22) ;
c. le positionnement du cadre d'élément de coupe de fourrage vert (19) à la position de coupe représentée par les données de position de coupe calculées ;
d. le déplacement de l'élément de coupe (22) le long de la trajectoire de coupe (25) avec le cadre d'élément de coupe de fourrage vert (19) à la position de coupe atteinte, moyennant quoi une quantité prédéterminée de fourrage vert est séparée du tas de fourrage vert (40) ; et
e. le déchargement de la quantité de fourrage vert séparée du tas de fourrage vert (40) en déplaçant la structure de support (2, 3) ;
**caractérisé en ce que** le cycle de retrait de fourrage vert comprend en outre :
f. le balayage d'au moins une partie de la partie avant (41) du tas de fourrage vert (40), la génération d'un deuxième résultat de balayage conformément aux signaux de mesure obtenus par le balayage, et, en commençant à partir du deuxième résultat de balayage, le calcul de deuxièmes données de forme représentant la forme de la partie avant (41) du tas de fourrage vert (40) après la coupe ;
dans lequel, à chaque fois, pendant un cycle de retrait de fourrage vert, avant de positionner l'élément de coupe (22) à la position de coupe, les premières données de forme sont comparées aux deuxièmes données de forme obtenues pendant un dernier cycle de retrait de fourrage vert précédent et, en réponse à une différence entre les premières et deuxièmes données de forme qui dépasse une valeur limite prédéterminée, le cycle de retrait de fourrage vert est arrêté avant la coupe.

2. Procédé selon la revendication 1, dans lequel la différence comparée à la valeur limite est une sommation des valeurs absolues des changements de forme mesurés.

3. Procédé selon la revendication 1 ou 2, dans lequel un coefficient de pondération plus grand est attribué aux changements de forme mesurés représentant une augmentation d'un volume de tas de fourrage vert qu'aux changements de forme représentant une diminution du volume de tas de fourrage vert.

4. Procédé selon l'une quelconque des revendications précédentes, dans lequel, pendant le balayage pour obtenir un premier résultat de balayage, au moins un châssis (2) de la structure de support (2, 3) est positionné à chaque fois à la même position que pendant le balayage pour obtenir le deuxième résultat de balayage à partir du dernier cycle de retrait de fourrage vert précédent.

5. Procédé selon la revendication 4, dans lequel, pendant le balayage, le châssis (2) est à chaque fois à la même position.

6. Procédé selon l'une quelconque des revendications précédentes, dans lequel, après l'arrêt d'un cycle de retrait de fourrage vert en réponse à une différence entre les premier et deuxième résultats de balayage qui dépasse une valeur limite prédéterminée, le cycle de retrait de fourrage vert est repris en réponse à un signal de libération généré en réponse à un actionnement d'un élément d'actionnement par un utilisateur.

7. Procédé selon la revendication 6, dans lequel l'élément d'actionnement est situé à une distance limitée de la structure de support (2, 3) ou fait partie de celle-ci.

8. Procédé selon l'une quelconque des revendications précédentes, dans lequel, en réponse à un arrêt de cycle de retrait de fourrage vert, un signal d'alarme est généré qui est reçu par un récepteur porté par l'utilisateur.

9. Procédé selon l'une quelconque des revendications précédentes, dans lequel, à chaque fois pendant un cycle de retrait de fourrage vert, avant que l'élément de coupe (22) soit positionné à la position de coupe, les premières données de forme obtenues pendant un dernier cycle de retrait de fourrage vert précédent sont comparées aux deuxièmes données de forme obtenues pendant ledit dernier cycle de retrait de fourrage vert précédent et, en réponse à une différence entre les premières données de forme obtenues pendant le dernier cycle de retrait de fourrage vert précédent et les deuxièmes données de forme obtenues pendant le dernier cycle de retrait de fourrage vert précédent qui est inférieure à une valeur limite prédéterminée, un signal d'avertissement est généré.

10. Procédé selon la revendication 9, dans lequel, en réponse au dit signal d'avertissement, le cycle de retrait de fourrage vert est arrêté avant la coupe.

11. Appareil pour couper du fourrage vert à partir d'une partie avant (41) d'un tas de fourrage vert (40), comprenant :
- un élément de coupe de fourrage vert (6) comportant un cadre d'élément de coupe de fourrage vert (19) et un élément de coupe (22) pouvant être déplacé par rapport au cadre d'élément de coupe de fourrage vert (19) le long d'une trajectoire de coupe (25) ;
- une structure de support automobile (2, 3) comportant une partie (3) pouvant être déplacée dans une condition de fonctionnement par rapport au tas de fourrage vert (40) qui supporte l'élément de coupe de fourrage vert (6) et une structure d'entraînement (4, 5) pour un déplacement d'entraînement de la partie mobile (3) par rapport au tas de fourrage vert (40) ;
- un scanner (27) pour balayer une partie de surface d'un tas de fourrage vert (40) faisant face à l'appareil (1), et pour générer un résultat de balayage conformément aux signaux de mesure obtenus par le balayage ;
- une commande (28) connectée au scanner (27) pour, en commençant à partir du résultat de balayage, calculer des données de forme représentant la forme de la partie avant (41) du tas de fourrage vert (40) ;
dans lequel la commande (28) est conçue pour :
commander ladite structure d'entraînement (4, 5) ; et
à chaque fois effectuer un cycle de retrait de fourrage vert comprenant :
a. le balayage d'au moins une partie de la partie avant (41) du tas de fourrage vert (40), la génération d'un premier résultat de balayage conformément aux signaux de mesure obtenus par le balayage, et, en commençant à partir du résultat de balayage, le calcul de premières données de forme représentant une forme initiale de la partie avant (41) du tas de fourrage vert (40) ;
b. en commençant à partir du résultat de balayage, le calcul de données de position de coupe représentant une position de coupe du cadre d'élément de coupe de fourrage vert (19) et de la trajectoire de coupe (25) de l'élément de coupe (22) ;
c. le positionnement du cadre d'élément de coupe de fourrage vert (19) à la position de coupe représentée par les données de position de coupe calculées ;
d. le déplacement de l'élément de coupe (22) le long de la trajectoire de coupe (25) alors que le cadre d'élément de coupe de fourrage vert (19) est à la position de coupe atteinte, moyennant quoi une quantité de fourrage vert prédéterminée est séparée du tas de fourrage vert (40) ; et
e. le déchargement de la quantité de fourrage vert séparée du tas de fourrage vert (40) en déplaçant la structure de support (2, 3) ;
**caractérisé en ce que** le cycle de retrait de fourrage vert comprend en outre :
f. le balayage d'au moins une partie de la partie avant (41) du tas de fourrage vert (40), la génération d'un deuxième résultat de balayage conformément aux signaux de mesure obtenus par le balayage, et, en commençant à partir du deuxième résultat de balayage, le calcul de deuxièmes données de forme représentant la forme de la partie avant (41) du tas de fourrage vert (40) après la coupe ;
dans lequel, à chaque fois pendant un cycle de retrait de fourrage vert, avant de positionner l'élément de coupe (22) à la position de coupe, les premières données de forme sont comparées aux deuxièmes données de forme obtenues pendant un dernier cycle de retrait de fourrage vert précédent, et, en réponse à une différence entre les premières et deuxièmes données de forme qui dépasse une valeur limite prédéterminée, le cycle de retrait de fourrage vert est arrêté avant la coupe.

12. Appareil selon la revendication 11, dans lequel la structure de support (2, 3) est pourvue d'au moins un capteur (26) connecté de manière fonctionnelle à la commande (28) pour recevoir des signaux associés à la position.

13. Système comprenant un appareil selon la revendication 12, comprenant en outre au moins une balise (44) détectable par ledit au moins un capteur, pour déterminer une position de balayage, dans lequel la commande est conçue pour provoquer à chaque fois l'exécution du balayage à partir de la position de balayage.

14. Système selon la revendication 13, dans lequel la balise (44) est dans le sol à une position qui, si l'appareil (1) est à la position de balayage, est située au-dessous de l'appareil (1).
